# EUROPÄISCHE PATENTSCHRIFT

(11) **EP 0 662 597 B1**
(45) Veröffentlichungstag und Bekanntmachung des Hinweises auf die Patenterteilung: **25.06.2003**
(21) Anmeldenummer: 94120374.7
(22) Anmeldetag: 22.12.1994
(51) Int. Cl.: F27D 3/00, B28B 11/00, F27D 5/00, F27D 3/06, F27D 3/12

(54) **Verfahren zum vollautomatischen Beladen eines mehrlagigen Gestellaufbaus von Ofenwagen zum Brennen von Keramikteilen und Vorrichtung zur Verfahrensdurchführung**
Process and device for automatically charging in several layers a firing furnace car with ceramic articles
Procédé et dispositif pour le chargement automatique en plusieurs couche d'un chariot de four de cuisson d'articles céramiques

(30) Priorität: 24.12.1993 DE 4344417
(43) Veröffentlichungstag der Anmeldung: 12.07.1995
(73) Patentinhaber: EISENMANN MASCHINENBAU KG (Komplementär: EISENMANN-Stiftung), 71032 Böblingen (DE)
(72) Erfinder: Görnhardt, André, D-71083 Herrenberg (DE)
(74) Vertreter: Ostertag, Ulrich, Dr.

(56) Entgegenhaltungen:
- CH-A- 300 848
- DE-A- 2 542 551
- DE-A- 3 442 161
- FR-E- 73 633
- GB-A- 2 279 731
- US-A- 4 505 630

## Beschreibung

Die Erfindung betrifft ein Verfahren zum vollautomatischen Beladen eines mehrlagigen Gestellaufbaus von Ofenwagen nach dem Oberbegriff des Anspruches 1 sowie eine Vorrichtung zur Durchführung dieses Verfahrens nach dem Oberbegriff des Anspruches 2.

Ein Verfahren und eine Vorrichtung dieser Art sind aus der DE-A-25 42 551 bekannt. In dieser werden das Umsetzen und Palettieren von zu brennenden Steinen beschrieben, wobei die Anordnung der Paletten im Ofenwagen in übereinander angeordneten Etagen erfolgt. Die Steine werden aus der Steinpresse kommend mittels einer Greifvorrichtung nach einem Setzbild auf einer Palette abgesetzt. Ist die Palette mit Steinen gefüllt, so wird sie waagerecht mit Hilfe eines Transport-Teilstückes zu einem weiteren Transport-Teilstück befördert. Von diesem wird die Palette unter Zuhilfenahme eines Manipulators aufgenommen und in den Ofenwagen verbracht. Für diesen Transport muß der Manipulator in allen drei Achsen verfahrbar sein. Hat der Manipulator die volle Palette im Ofenwagen abgesetzt, so nimmt er aus einer anderen Stelle des Ofenwagens eine Leerpalette auf und bringt sie zu einer oberhalb des Transport-Teilstücks verlaufenden Palettenvorlageeinrichtung. Von der Palettenvorlageeinrichtung wird die Leerpalette in die Beladeposition abgesenkt. Hiernach beginnt der Zylkus auf neue. Den zu brennenden Steinen ist nicht jeweils ein gesondertes Brennhilfsmittel zugeordnet.

Aufgabe der vorliegenden Erfindung ist es, ein Verfahren und eine Vorrichtung der im Oberbegriff des Anspruches 1 bzw. des Anspruches 2 genannten Art zu vereinfachen.

Diese Aufgabe wird durch das im Anspruch 1 beschriebene Verfahren bzw. durch die im Anspruch 2 beschriebene Vorrichtung gelöst.

Vorteilhafte Ausführungsformen der erfindungsgemäßen Vorrichtung sind in den Ansprüchen 3 bis 7 angegeben.

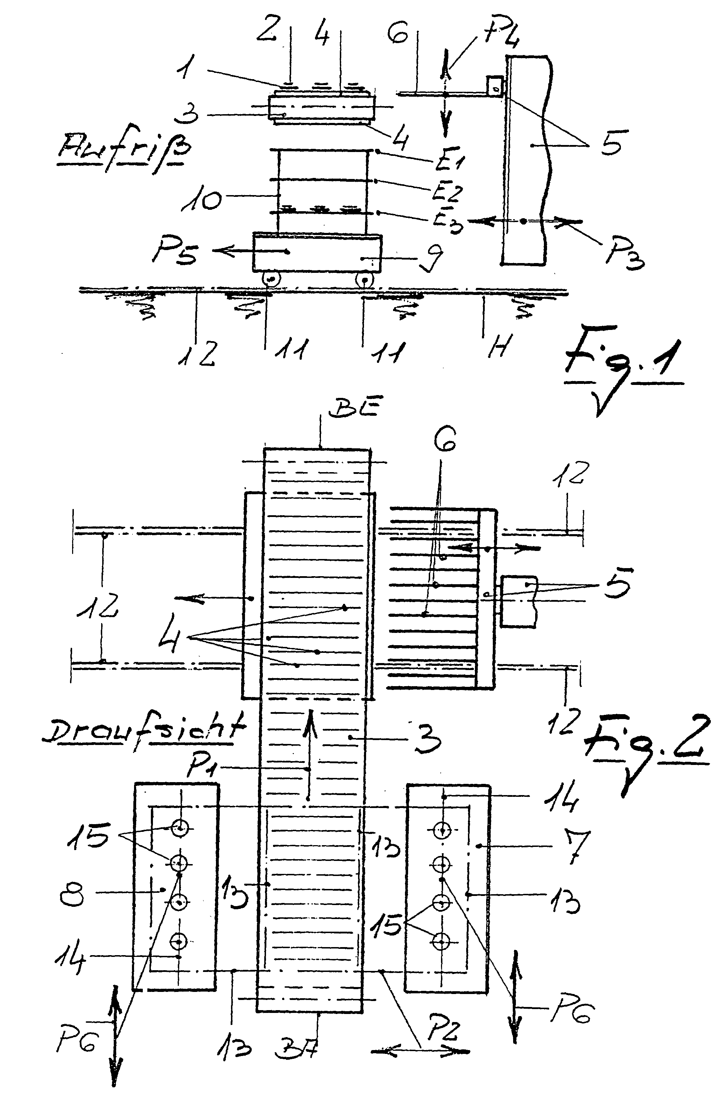

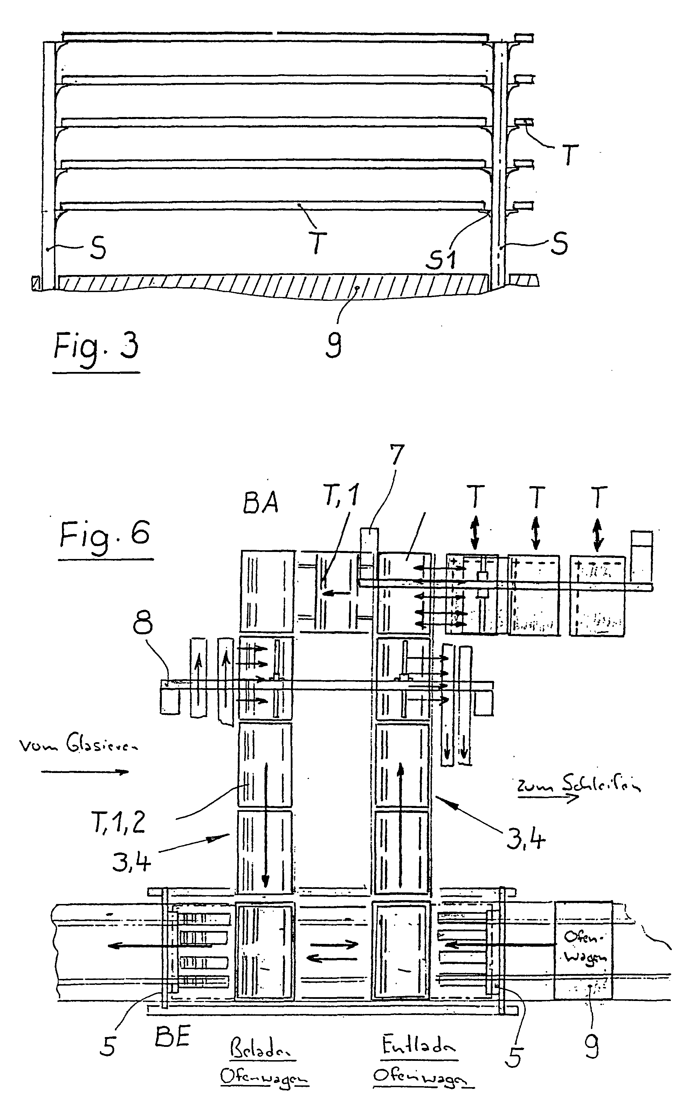

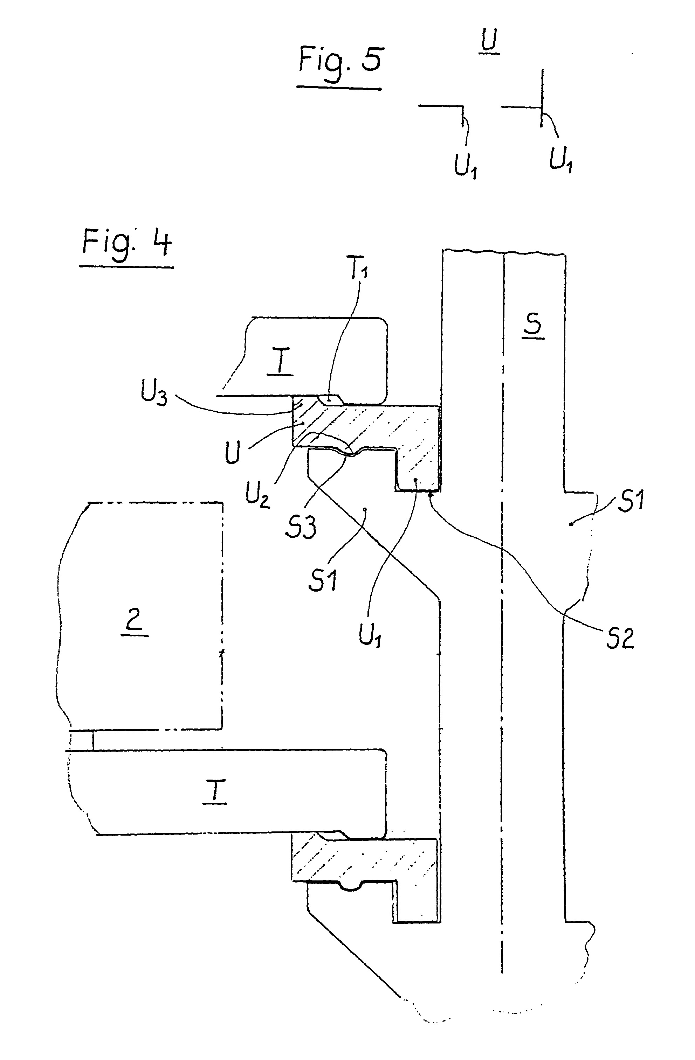

Zur Erläuterung der Erfindung dient eine weitestgehend schematische Zeichnungsdarstellung als Systemaufriß mit Draufsicht auf eine Anlage zur Durchführung des neuen Beladeverfahrens; die Figuren 3 bis 6 zeigen weitere Ausführungsvarianten dieser Anlage.
Bei dem neuen Verfahren zum vollautomatischen Beladen eines mehrlagigen Gestellaufbaus 10 von Ofenwagen 9 zum Brennen von Keramikteilen, insbesondere von sogenannter Flachware 2 in der Porzellanindustrie, bei dem die Brennware 2 in ihrer Form und/oder Größe entsprechenden Setzbildern mittels beispielsweise scheibenartiger, kreisringförmiger Brennhilfsmittel 1 auf Rosten E₁, E₂, E₃ des Gestellaufbaus 10 des Ofenwagens 9 ruht, wird zunächst zurückgegriffen auf die eingangs bereits für einlagige Gestellaufbauten erwähnte Technik der Erzeugung der Setzbilder in optimaler Raumausnutzung durch entsprechend programmierte Setzautomaten 7, 8 samt zugehörigem, horizontal verschieblichem Transfersystem 13 und daran sitzenden Greiferschienen 14 mit beispielsweise vertikal bewegbaren ( Saug- ) Greifern 15.

Nach dem anmeldegemäßen neuen Verfahren erfolgt nun das Erzeugen der jeweiligen, aus Brennhilfsmittel 1 und Flachware 2 bestehenden entsprechend programmierten Setzautomaten 7 und 8 zunächst auf einem ebenen Hilfsrost und erst anschließend daran das Überführen des jeweiligen Setzbildes von dem Hilfsrost mittels eines geeigneten Manipulators 5, 6 in die einzelnen Ebenen E₁, E₂ und E₃ des Gestellaufbaus 10 des Ofenwagens 9.

Zur Durchführung dieses Verfahrens neu sind dabei zudem folgende anlagenspezifische Merkmale:
a. Als Hilfsrost dient ein mit entsprechenden Querrippen oder Stegen 4 auf seiner Oberfläche versehenes Horizontal-Förderband 3.
b. Der Manipulator besitzt zu den Querrippen bzw. Stegen 4 des Förderbandes 3 auf Lücke liegende Rechenzinken 6 und ist horizontal ( Pfeil P₃) sowie vertikal ( Pfeil P₄ ) verfahrbar. Er ist somit also in der Lage, die im Bandbereich "BA" erzeugten Setzbilder, nach dem Verfahren des Förderbandes 3 in Pfeilrichtung P₁, im Bandbereich "BE" mittels der Rechenzinken 6 aufzunehmen und in jede der Gestellebenen E₁ bzw. E₂ jede der Gestellebenen E₁ bzw. E₂ und E₃ des ebenfalls in Position gebrachten, mittels Rädern 11 auf Schienen 12 geführten Ofenwagens 9, einzubringen und dort abzusetzen.

Eine anlagenmäßig optimale Raumausnutzung ist zudem gegeben, wenn daß die Setzautomaten 7, 8 zur Erzeugung der jeweiligen Setzbilder auf dem Hilfsrost ( Stege 4 des Förderbandes 3 ) in Bandumlaufrichtung ( Pfeil P₁ ) gesehen am Bandanfang "BA", angeordnet sind, der Manipulator 5 zum Überführen der Setzbilder vom Hilfsrost 3, 4 auf die jeweiligen Ebenen E₁ bzw. E₂ bzw. E₃ des Ofenwagens 9 parallel versetzt zu den Setzautomaten 7, 8 am Bandende "BE" liegt.

Weitere Vorteile ergeben sich in dem der Manipulator 5 und der Hilfsrost 3, 4 derart angeordnet sind, daß der Ofenwagen 9 an diesen 3, 4, 5 zumindest vorbeifahren kann; in ganz spezieller Bauweise bewegt sich der Ofenwagen 9 unter dem Manipulator 5 und dem Hilfsrost 3, 4 hindurch.

In den Fig. 3 bis 6 ist eine Weiterbildung der verfahrens- und vorrichtungsgemäßen Grundidee aufgezeigt. In der Fig. 3 ist ein Ofenwagen 9 dargestellt, der Prismen T aufweist, die quer zur Horizontalbewegung des Manipulators 5 gesehen, zwischen Säulen S des Ofenwagens 9, auf Prismenträger U, die in Auflagen S₁ der Säulen S lagern, fixiert aufgelegt sind.

Dabei ist es von Vorteil, daß die Prismenträger U einen s-förmigen Querschnitt aufweist und mit einem Schenkel U₁ sowie einer Nase U₂ in einer Nut S₂ und einer Rille S₃ der Auflage S₁ aufliegend eingreifen und daß ein Widerhaken U₃ am Prismenträger U, dem Prisma T zugewandt, vorgesehen ist, siehe hierzu die Fig. 4. Der Querschnitt der Prismenträger U kann gemäß der Fig. 5 auch L- oder T-förmig sein oder eine andere zweckmäßige Form haben.

Die Fig. 6 zeigt nun noch eine weitre anlagenmäßige vorteilhafte Gestaltung. Der bereits erwähnte Setzautomat 7 zum Setzen der Brennhilfsmittel 1 ist dort derart ausgebildet, daß zuvor die Prismen U ebenfalls gesetzt und mittels dem Manipulator 5 die aus Prismen U, Brennhilfen 1 und Brennware 2 gebildeten Setzbilder in den Ofenwagen 9 umgesetzt werden. Weiterhin ist ein zweites Förderband 3, 4 zum Entladen des Ofenwagens 9 vorgesehen.

Die Vorteile des beschriebenen Verfahrens und der dargestellten Vorrichtungsvarianten bestehen vor allem in:
- einer optimalen Besetzfläche,
- optimalen Durchspülung durch luftigen Wagenaufbau, Temperatur- und Atmosphärengleichmäßigkeit über gesamten Querschnitt,
- einem niedrigen Verhältnis von Brennhilfsmittel zur Ware, damit Einsparung von Energiekosten,
- einer langen Lebensdauer der Brennhilfsmittel durch günstige Form der Elemente,
- einem flexibel nutzbaren Aufbau: Regal und Brennrost sind setzbildunabhängig, Brennringe sind setzbildabhängig und werden entsprechend dem zu fahrenden Artikel ausgetauscht. Brennringe sind kostengünstig sowie einfach und platzsparend zu puffern, damit ergeben sich niedrige Investitionskosten,
- daß das Regal von oben nach unten beladbar ist, eine Verminderung von Ausschuß durch Befall wird erzielt,
- der Verminderung des Brennhilfsmittelgewichtes der besseren Ausnutzung des Brennraumes, fünf Lagen in gleicher Höhe und in
- einer höheren Betriebssicherheit, da größere Freiräume und Toleranzbereiche für Handlinggeräte gegeben sind.

### Bezugszeichenliste

- 1: Brennhilfsmittel
- 2: Flachware
- 3: Förderband
- 4: Querrippe bzw. -steg
- 5: Manipulator
- 6: Rechenzinken
- 7: Setzautomat für die Brennhilfsmittel
- 8: " " " Flachware
- 9: Ofenwagen
- 10: Gestellaufbau
- 11: Laufrad
- 12: Schiene
- 13: Transfersystem der Setzautomaten
- 14: Greiferschiene
- 15: ( Saug- ) Greifer

- BA: Bandanfang
- BE: Bandende
- E₁: Ebene des Ofenwagens
- H: Hallenboden
- P₁: Bandumlaufrichtung
- P₂: Horizontalbewegung des Transfersystems
- P₃: Horizontalbewegung des Manipulators
- P₄: Vertikalbewegung des Manipulators
- P₅: Fahrtrichtung des Ofenwagens
- P₆: Horizontalbewegung der Greiferschienen
- S: Säule
- S₁: Auflage
- S₂: Nut
- S₃: Rille
- T: Prisma
- T₁: Aussparung
- U: Prismenträger
- U₁: Schenkel
- U₂: Nase
- U₃: Widerhaken

## Patentansprüche

1. Verfahren zum vollautomatischen Beladen eines mehrlagigen Gestellaufbaus von Ofenwagen (9) zum Brennen von Keramikteilen, insbesondere von sog. Flachware (2) in der Porzellanindustrie, wobei die Brennware (2) in ihrer Form und/oder Größe entsprechenden Setzbildern auf Rosten des Ofenwagens (9) ruht, wobei die Erzeugung der jeweiligen Setzbilder jeder Lage durch entsprechend programmierte Setzautomaten (7, 8) zunächst auf einem ebenen, taktweise bewegbaren Förderband (3) erfolgt, welches das jeweils erzeugte Setzbild zur Übernahme durch einen Manipulator (5) in seinem Endbereich positioniert,
**gekennzeichnet durch**
Aufsetzen der jeweiligen Setzbilder auf einem umlaufenden Hilfsrost (3, 4) des besagten Förderbandes, wobei für jede Brennware (2) auf dem Hilfsrost (3, 4) ein beispielsweise scheibenartiges, kreisringförmiges Brennhilfsmittel (1) gesetzt wird, und anschließendes Überführen des jeweiligen Setzbildes von dem Hilfsrost (3, 4) mittels eines Manipulators (5) in die einzelnen Ebenen (E₁, E₂, E₃) des Gestellaufbaus des Ofenwagens (9), indem die Setzbilder lediglich vertikal nach unten in den Ofenwagen (9) bewegt werden, wobei der Manipulator (5) nur in zwei Richtungen (Bewegungsachsen), einer vertikalen und einer horizontalen Achse, bewegt werden muß.

2. Vorrichtung zur Durchführung des Verfahrens nach Anspruch 1 zum vollautomatischen Beladen eines mehrlagigen Gestellaufbaus von Ofenwagen (9) zum Brennen von Keramikteilen, insbesondere von sog. Flachware (2) in der Porzellanindustrie, wobei die Brennware (2) in ihrer Form und/oder Größe entsprechenden Setzbildern auf Rosten des Ofenwagens (9) ruht, die ein Förderband (3), Setzautomaten (7, 8), einen Manipulator (5) und Steuerungstechnik umfasst und bei der die Setzautomaten (7, 8) in Bandumlaufrichtung (Pfeil B1) gesehen am Bandanfang (BA) des Förderbandes (3) und der Manipulator (5) parallel versetzt zu den Setzautomaten (7, 8) am Bandende (BE) angeordnet sind und das Förderband (3) ein Horizontalförderband ist,
**gekennzeichnet durch** folgende anlagenspezifische Merkmale:
daß beispielsweise scheibenartige kreisförmige Brennhilfsmittel (1) für die Brennware (2) vorgesehen sind,
daß das Förderband (3) mit Querrippen oder Stegen (4) auf seiner Oberfläche versehen einen Hilfsrost (3, 4) bildet,
daß der Manipulator (5) zu den Querrippen bzw. Stegen (4) des Förderbandes (3) auf Lücke liegende Rechenzinken (6) besitzt und daß er horizontal nur in einer Richtung sowie vertikal verfahrbar ist und
daß das Förderband (3) über den Ofenwagen (9) ragt und in seiner Länge derart bemessen ist, daß das Setzbild direkt über die Ebenen (E₁, E₂, E₃) des Ofenwagens (9) verfahren werden kann.

3. Vorrichtung nach Anspruch 2,
**dadurch gekennzeichnet,**
**daß** der Manipulator (5) und der Hilfsrost (3, 4) derart angeordnet sind, daß der Ofenwagen (9) an diesen (3, 4, 5) zumindest vorbeifahren kann.

4. Vorrichtung nach Anspruch 3,
**dadurch gekennzeichnet,**
**daß** der Ofenwagen (9) unter dem Manipulator (5) und dem Hilfsrost (3, 4) hindurch bewegt werden kann.

5. Vorrichtung nach einem der Ansprüche 2 bis 4,
**dadurch gekennzeichnet,**
**daß** der Ofenwagen (9) Prismen (T) aufweist, die quer zur Horizontalbewegung des Manipulators (5) gesehen, zwischen Säulen (S) des Ofenwagens (9), auf Prismenträger (U), die in Auflagen (S₁) der Säulen (S) lagern, fixiert aufgelegt sind.

6. Vorrichtung nach Anspruch 5,
**dadurch gekennzeichnet,**
**daß** die Prismenträger ( U ) einen s-förmigen Querschnitt aufweisen und mit einem Schenkel (U₁) sowie einer Nase ( U₂ ) in einer Nut (S₂) und einer Rille (S₃) der Auflage (S₁) aufliegend eingreifen und daß ein Widerhaken (U₃) am Prismenträger (U) dem Prisma (T) zugewandt, vorgesehen ist.

7. Vorrichtung nach einem der Ansprüche 5 bis 6,
**dadurch gekennzeichnet,**
**daß** der Setzautomat (7) zum Setzen der Brennhilfsmittel (1) und der Prismen (T) und der Manipulator (5) zum Übersetzen der auf den Brennhilfsmitteln (1) und Prismen (T) gebildeten Setzbilder, ausgestattet sind.

## Claims

1. A process for the fully automatic loading of a multilayer rack construction of furnace carriages (9) for firing ceramic parts, particularly so-called flatware (2) in the porcelain industry, the ware (2) to be fired resting in set formations corresponding to its shape and/or size on grates of the furnace carriage (9), correspondingly programmed automatic positioning devices (7, 8) firstly generating the respective set formations of each layer on an intermittently movable planar conveyor belt (3) which positions the respectively generated set formation such that it is received by a manipulator (5) in its end region
**characterised by**
placing the respective set formations on a revolving auxiliary grate (3, 4) of the said conveyor belt, a plate-like ring-shaped kiln furniture (1), for example, being positioned on the auxiliary grate (3, 4) for each ware (2) to be fired, and a manipulator (5) then transferring the respective set formation from the auxiliary grate (3, 4) into the individual planes (E₁, E₂, E₃) of the rack construction of the furnace carriage (9) in that the set formations are moved merely vertically downwards into the furnace carriage (9), the manipulator (5) having to be moved in only two directions (movement axes), a vertical and a horizontal axis.

2. A device for carrying out the process according to Claim 1 for the fully automatic loading of a multilayer rack construction of furnace carriages (9) for firing ceramic parts, particularly so-called flatware (2) in the porcelain industry, the ware (2) to be fired resting in set formations corresponding to its shape and/or size on grates of the furnace carriage (9), which device comprises a conveyor belt (3), automatic positioning devices (7, 8), a manipulator (5) and control technology, the automatic positioning devices (7, 8) being arranged at the belt start (BA) of the conveyor belt (3) - as seen in the direction of revolution of the belt (arrow B1) - and the manipulator (5) being arranged such that it is offset parallel to the automatic positioning devices (7, 8) at the belt end (BE), and the conveyor belt (3) being a horizontal conveyor belt,
**characterised by** the arrangement-dependent features below:
plate-like ring-shaped kiln furniture (1), for example, is provided for the ware (2) to be fired,
the conveyor belt (3) forms an auxiliary grate (3, 4) with transverse ribs or webs (4) provided on its surface;
the manipulator (5) has prongs (6) located at a spacing from the transverse ribs or webs (4) of the conveyor belt (3) and can be moved horizontally in only one direction and also vertically, and
the conveyor belt (3) protrudes beyond the furnace carriage (9) and is of such a length that the set formation can be moved directly over the planes (E₁, E₂, E₃) of the furnace carriage (9).

3. A device according to Claim 2,
**characterised in that**
the manipulator (5) and the auxiliary grate (3, 4) are arranged in such a way that the furnace carriage (9) can at least move past them (3, 4, 5).

4. A device according to Claim 3,
**characterised in that**
the furnace carriage (9) can be moved through below the manipulator (5) and the auxiliary grate (3, 4).

5. A device according to one of Claims 2 to 4,
**characterised in that**
the furnace carriage (9) has V-blocks (T) which, as seen transversely to the horizontal movement of the manipulator (5), are placed in fixed manner between columns (S) of the furnace carriage (9) on V-block holders (U) borne in supports (S₁) of the columns (S).

6. A device according to Claim 5,
**characterised in that**
the V-block holders (U) have an s-shaped cross-section and engage with a limb (U₁) and a lug (U₂) in a groove (S₂) and a channel (S₃) of the support (S₁) such that they lie thereon, and **in that** a barb-like portion (U₃) is provided on the V-block holder (U) such that it faces the V-block (T).

7. A device according to one of Claims 5 and 6,
**characterised in that**
the automatic positioning device (7) is equipped for positioning the kiln furniture (1) and the V-blocks (T) and the manipulator (5) is equipped for transferring the set formations created on the kiln furniture (1) and V-blocks (T).

## Revendications

1. Procédé de chargement totalement automatique d'une structure de châssis multicouches de chariots (9) de fours, pour la cuisson d'articles céramiques, notamment des "articles plats" (2) dans l'industrie de la porcelaine, l'article (2) à cuire reposant sur des grilles du chariot (9) de four selon des configurations d'agencement correspondant à sa forme et/ou à sa taille, la génération des configurations d'agencement respectives de chaque couche étant tout d'abord effectuée, par des automates d'agencement (7, 8) programmés en conséquence, sur une bande convoyeuse plane (3) mobile cycliquement, qui positionne la configuration d'agencement respectivement engendrée, dans sa région extrême, en vue du prélèvement par un manipulateur (5),
**caractérisé par**
une mise en place des configurations d'agencement respectives sur une grille auxiliaire tournante (3, 4) de la bande convoyeuse précitée, un auxiliaire de cuisson (1) en forme d'anneau circulaire, de type discoïdal par exemple, étant déposé sur la grille auxiliaire (3, 4) pour chaque article (2) à cuire ; et par un transfert consécutif de la configuration d'agencement respective, au moyen d'un manipulateur (5), depuis la grille auxiliaire (3, 4) jusqu'aux plans individuels (E₁, E₂, E₃) de la structure de châssis du chariot (9) de four, en introduisant les configurations d'agencement, dans ledit chariot (9) de four, uniquement par un mouvement vertical vers le bas, sachant que le manipulateur (5) doit être animé d'un mouvement dans deux directions seulement (axes de mouvement), selon un axe vertical et un axe horizontal.

2. Dispositif pour la mise en oeuvre du procédé selon la revendication 1, en vue du chargement totalement automatique d'une structure de châssis multicouches de chariots (9) de fours pour la cuisson d'articles céramiques, notamment des "articles plats" (2) dans l'industrie de la porcelaine, l'article (2) à cuire reposant sur des grilles du chariot (9) de four selon des configurations d'agencement correspondant à sa forme et/ou à sa taille ; qui comprend une bande convoyeuse (3), des automates d'agencement (7, 8), un manipulateur (5) et un groupe technique de commande ; et dans lequel, en observant dans la direction de défilement (flèche B1) de la bande, les automates d'agencement (7, 8) se trouvent au début (BA) de ladite bande convoyeuse (3) et le manipulateur (5) se trouve à la fin (BE) de ladite bande, avec décalage parallèle vis-à-vis desdits automates d'agencement (7, 8), et la bande convoyeuse (3) est une bande convoyeuse horizontale,
**caractérisé par** les spécificités d'installation suivantes :
des auxiliaires circulaires de cuisson (1), de type discoïdal par exemple, sont prévus pour l'article (2) à cuire,
la bande convoyeuse (3), munie de nervures transversales ou de membrures (4) sur sa surface, forme une grille auxiliaire (3, 4),
le manipulateur (5) possède des fourchons (6) placés en quinconce respective par rapport aux nervures transversales ou aux membrures (4) de la bande convoyeuse (3), en étant déplaçable verticalement, ainsi que dans une seule direction horizontalement, et
la bande convoyeuse (3) dépasse au-delà du chariot (9) de four, et sa longueur est dimensionnée de façon telle que la configuration d'agencement puisse être directement déplacée au-dessus des plans (E₁, E₂, E₃) dudit chariot (9) de four.

3. Dispositif selon la revendication 2,
**caractérisé par le fait**
**que** le manipulateur (5) et la grille auxiliaire (3, 4) occupent des positions telles que le chariot (9) de four puisse au moins passer en regard de ces derniers (3, 4, 5).

4. Dispositif selon la revendication 3,
**caractérisé par le fait**
**que** le chariot (9) de four peut être animé d'un mouvement continu au-dessous du manipulateur (5) et de la grille auxiliaire (3, 4).

5. Dispositif selon l'une des revendications 2 à 4,
**caractérisé par le fait**
**que** le chariot (9) de four comporte des prismes (T) qui, observés transversalement par rapport au mouvement horizontal du manipulateur (5), sont consignés à demeure entre des colonnes (S) dudit chariot (9) de four, sur des supports (U) montés dans des appuis (Si) desdites colonnes (S).

6. Dispositif selon la revendication 5,
**caractérisé par le fait**
**que** les supports (U) des prismes présentent une section transversale configurée en S et pénètrent à plat, par une branche (U₁) et par un mentonnet (U₂), dans une rainure (S₂) et une striure (S₃) de l'appui (S₁) ; et par le fait qu'un ardillon (U₃), tourné vers le prisme (T), est prévu sur le support (U) dudit prisme.

7. Dispositif selon l'une des revendications 5 à 6,
**caractérisé par le fait**
**que** l'automate d'agencement (7) est équipé pour la miss en place des auxiliaires de cuisson (1) et des prismes (T), et le manipulateur (5) est équipé pour le transfert des configurations d'agencement formées sur lesdits auxiliaires de cuisson (1) et lesdits prismes (T).
